# EUROPÄISCHE PATENTANMELDUNG

(11) **EP 1 304 203 A1**
(43) Veröffentlichungstag der Anmeldung: **23.04.2003**
(21) Anmeldenummer: 02018570.8
(22) Anmeldetag: 18.08.2002
(51) Int. Cl.: B29C 44/50

(54) **Extrudierter offenzelliger Kunststoffschaum mit verzögerter Rückstellung**

(30) Priorität: 22.10.2001 DE 10151334
(71) Anmelder: Fagerdala Benelux SA, 4890 Thimister-Clermont (BE)
(72) Erfinder: Strasser, Jean-Paul, 52076 Aachen (DE)
(74) Vertreter: Kaewert, Klaus

(57) **Zusammenfassung**

Nach der Erfindung werden offenzellige Dichtungsschäume mit Außenhaut extrudiert, die sich leicht verformen lassen, wenn sie in einem Dichtspalt positioniert werden.

## Beschreibung

Die Erfindung betrifft einen extrudierten offenzelligen Kunststoffschaum, insbesondere für Anwendungen
als Dichtung gegen nicht drückende Medien. Dazu gehören Wasser, Luft und andere Gase sowie Staub und andere nicht drückenden Feststoffpartikel vor allem für Bauwerke, Möbel, Schränke, Maschinenschränke bzw. Elektroschränke, Klimakanäle bzw. Ventilationskanäle/Schächte, Kühlschränken
als Dämmung gegen Lärm, zum Beispiel in Stahl- und Baukonstruktionen, auch als Trittschalldämmung (z.B. in Form von Bahnen oder Randdämmstreifen) oder in Form von Ohrschützern
als Dämmung gegen Kälte/Wärme, insbesondere zur Ausfüllung von Spalten und Fugen
als Profile, Bahnen- oder Plattenware
als Dämpfung von Vibration
als Stoßdämpfung, vor allem für Verpackungen, in Fahrzeugen,
als Komforteile für Sohlen, Handgriffe und andere Teile, die mit Körperteilen in Berührung kommen.

Dichtungen kommen in einer Vielzahl von Formen und Anwendungen vor. Die Qualität der Dichtungen und ihre Form orientiert sich an den Anwendungen.

An Bauwerken stellen sich auch andere Dichtungsprobleme. Dazu gehören größere Spalten/Fugen, die mit Silikon oder anderem elastischen Dichtungsmittel verschlossen werden sollen. Das Silikon wird üblicherweise aus Kartuschen in die Spalten und Fugen gepreßt. Dabei stellt sich das Problem, wie die verpreßte Silikonmenge bei großer Tiefe der Spalten reduziert werden kann. Dazu ist es bekannt, die Spalten und Fugen mit Kunststoffschaumprofilen zu verschließen, so daß das elastische Dichtungsmittel nicht in der Tiefe der Spalten und Fugen verloren gehen kann bzw. der Verbrauch an Dichtungsmittel verringert werden kann.

Vorzugsweise werden für solche Zwecke Schaumprofile aus offenzelligem Polyurethan (PUR) oder geschlossenzelligem, extrudiertem Polyethylen (PE) verwendet.
Die Begriffe "Offenzellig" und "Geschlossenzellig" sind dabei nicht absolut zu sehen. Ein offenzelliger Schaum besitzt regelmäßig auch geschlossene Zellen; umgekehrt ein geschlossenzelliger Schaum regelmäßig auch offene Zellen. Soweit von einem offenzelligen Schaum ausgegangen wird, besitzt der Schaum zu einem großen Teil bzw. weitgehend offene Zellen. Bei geschlossenzelligem Schaum besitzt der Schaum zu einem großen Teil bzw. weitgehend geschlossene Zellen. Für genaue Angaben sind %-Zahlen zur Offenzelligkeit oder Geschlossenzelligkeit zweckmäßig.

Polyurethan läßt sich durch Schneiden aus Blöcken und Platten leicht zu Schaumprofilen verarbeiten. Das Besondere an der Herstellung solcher Schaumprofile ist weniger das Schäumen an sich, als das ungehinderte Eindringen von Feuchtigkeit in den PUR-Schaum. Die geschlossenzelligen PE-Schäume sind zwar wesentlich weniger feuchtigkeitsempfindlich als die PUR-Schäume. Sie lassen sich jedoch auch wesentlich weniger zusammendrücken. Will man unterschiedliche Spalten/Fugen schließen können, so erzwingt das eine Vorhaltung verschiedenster Schaumabmessungen für unterschiedliche Fugenabmessungen bzw. Abmessungen von Spalten in Bauwerken.
In geschlossenzelligen Schäumen wird deren Rückstellkraft von dem eingeschlossenen Gas bzw. der eindiffundierten Luft bestimmt. Es sind eine Reihe von Schäumen bekannt, die geschlossenzellig hergestellt werden.
Strangförmiger geschlossenzelliger Kunststoff-Schaum wird z.B. in Form von Rundschnüren angeboten. Es gibt auch Schäume anderen Querschnittes, quadratisch bzw. rechteckig.

Die Montage geschlossenzelliger Schaumstränge ist mehr oder weniger mühsam, weil das Zusammendrücken solcher Schäume zunehmende Kraft erfordert, wenn der Schaum in eine Nut oder einen Spalt/Fuge gezwängt werden muß. Die Schwierigkeiten werden ohne weiteres erkennbar, wenn zum Beispiel ein Schaumstrang mit einem Durchmesser von 15 mm auf einen Durchmesser von 10mm und noch darüber hinaus zusammengedrückt werden soll.

Anders verhält sich ein offenzelliger Schaum. Bei einem offenzelligen Schaum kann das sich in den Zellen befindliche Gas nicht nur ausdiffundieren, sondern auch durch Öffnungen der Zellwände ausströmen. Solche offenzelligen Schäume sind bisher aus PUR oder aus Polyvinylchlorid (PVC) oder aus synthetischem Gummi hergestellt worden. Allerdings muß berücksichtigt werden, daß PUR wenig witterungsbeständig ist. Die Witterungsbeständigkeit soll durch eine Bitumenimprägnierung oder durch andere Imprägnierungen des Schaumes erreicht werden. Bitumen ist jedoch nicht stabil. Das Bitumen verflüchtigt sich im Laufe der Zeit zumindest größtenteils. Die Imprägnierung wird durch Feuchtigkeit und Wärme ausgetragen.
PVC-Schäume sind aus dem Gesichtspunkt der Entsorgung und aus anderen Gründen weniger erwünscht.
Gummiprofil besitzen regelmäßig ein hohes Raumgewicht, das nicht immer erwünscht ist. Der Erfindung liegt daher die Aufgabe zugrunde, einen leicht handhabbaren, möglichst witterungsbeständigen Schaumstrang herzustellen. Nach der Erfindung wird das erreicht durch
a) an sich bekannte Verwendung eines thermoplastischen Kunststoffes, vorzugsweise von PE, und
b) Extrusion des Kunststoffes zu einem offenzelligen Schaum unter Erzeugung einer Außenhaut an dem Schaumstrang
c) wobei die Außenhaut vorzugsweise wasserundurchlässig, reißfest und elastisch ist
d) wobei die Offenzelligkeit so groß gewählt ist, daß der Schaum eine verzögerte Rückstellung besitzt.

Die Offenzelligkeit entsteht bei dem Schäumvorgang, vorzugsweise beim Extrudieren, nicht durch anschließende mechanische Zerstörung der Zellstruktur infolge übermäßiger Kompression.
In verschiedenen der oben angesprochenen Anwendungen ist offenzelliger Kunststoffschaum unbekannt.
In anderen Anwendung findet PE-Schaum Anwendung, der aber bisher keine Außenhaut besitzt bzw. keine nennenswert wasserfeste und/oder reißfeste und/oder elastische Außenhaut besitzt.

Maßstab für die Verzögerung ist ein Prüfkörper aus dem jeweiligen Schaum mit
e) einer Länge von 10 cm, einer Dicke von 1 cm und einer Breite von 3 cm, der an der Mitte im flach liegenden Zustand bei einer Raumtemperatur von 20 Grad Celsius auf einer Länge von 3 cm über seiner Breite mit einem flachen Stempel in einer Zeit von 1 sec mit möglichst gleichbleibender Geschwindigkeit um 80% auf 2 mm Dicke eingedrückt und dort eine weitere Sekunde gehalten und anschließend schlagartig entlastet wird.
f) nach der Entlastung soll der Prüfkörper mindestens 3 sec, vorzugsweise mindestens 5 sec und noch weiter bevorzugt mindestens 10 sec benötigen, um im Wege der Rückstellung 100% seiner ursprünglichen Form (10 mm Dicke) wieder zu erreichen.

Anstelle des beschriebenen Prüfkörpers können auch beliebige andere Prüfkörper Einsatz finden oder abweichende Muster untersucht werden. Die angegebene Verzögerung muß dann auf die Abmessungen der anderen Prüfkörper runter gerechnet oder hoch gerechnet werden. Bei anderen Prüfkörpern empfiehlt es sich, entweder
g) aus dem zur Prüfung anstehenden Material die oben beschriebenen Prüfkörper herauszuschneiden, wenn das zur Prüfung anstehende Material größere Abmessungen als die oben beschriebenen Prüfkörper hat
h) oder aus einem Prüferkörper bekannten Materials einen Vergleich-Prüfkörper mit den relevanten Abmessung des zur Prüfung anstehenden Materials herauszuschneiden, wenn die Abmessungen des zur Prüfung anstehenden Materials kleiner als der oben beschriebene Prüfkörper ist. Die Werte des gewonnen Vergleichsprüfkörpers lassen sich dann mit dem zur Prüfung anstehenden Material vergleichen. Wahlweise können die daraus gewonnenen Ergebnisse anschließend auf einen Vergleich mit dem unter g) beschriebenen Prüfkörper hoch gerechnet werden.

Die Prüfung der Haut erfolgt wahlweise an Prüfstücken, die aus dem erfindungsgemäßen Schaum herausgeschnitten werden. Vorzugsweise an einer 3 mm starken Deckschicht (Haut und darunter liegenden Zellen), die von dem Schaum abgetrennt wird.

Die Extrusion erfolgt in einem Extruder. In den Extruder wird der zumeist granulatförmige Kunststoff mit Zuschlagstoffen aufgegeben. Zu den Zuschlagstoffen können unter anderem gehören: Gleitmittel, Keimbildner für die Zellen des gewünschen Schaumes, Stabilisatoren, Farben, Füller, Alterungsmittel, Flammschutzmittel

Es stehen Extruder unterschiedlicher Bauart zur Verfügung. Am häufigsten kommen der Einschneckenextruder und der Zweischneckenextruder/Doppelschneckenextruder vor. Mit Einschnecken und Zweischnecken/Doppelschnecken ist die Zahl der Schnecken bezeichnet. Die Schnecken ziehen das Einsatzmaterial in den Extruder ein,
bauen Druck auf,
verursachen eine Erwärmung,
so daß der Kunststoff in eine Schmelze übergeht.
Es ist üblich, die Bildung der Schmelze durch eine Erwärmung über das Extrudergehäuse zu unterstützen. Nach Entstehen der Schmelze werden die Zuschläge in der Schmelze fein verteilt, dispergiert. An zeitgemäßen Extrudern wird in dieser Phase Treibmittel in flüssiger/gasförmiger Form in den Extruder gespritzt. Anschließend findet noch eine Homogenisierung und Kühlung der Schmelze auf Extrusionstemperatur statt. Für die Herstellung von Schaum ist wichtig, daß vor der Extrusionsdüse eine ausreichender Druck aufgebaut wird, der ein Aufschäumen der Schmelze im Extruder verhindert. Wenn nun der Schaum in die umgebende Atmosphäre austritt, fällt der den Schmelzestrang umgebende Druck stark ab und das eingeschlossene, fein verteilte und gasförmige Treibmittel expandiert unter dem in der Schmelze herrschenden Druck schlagartig. Da das Treibmittel in der Schmelze fein verteilt ist, entsteht so eine Vielzahl kleiner Zellen.
Bei dem erfindungsgemäßen Verfahren wird die Extrusionsdüse temperiert und damit auf gleicher Extrusionstemperatur gehalten wie die Schmelze. Gleichwohl bildet sich nach dem erfindungsgemäßen Verfahren eine Haut an der Außenfläche des Stranges.

Die Offenzelligkeit entsteht beim Schäumen, wenn die Nachgiebigkeit der Zellwände nicht mehr ausreicht, um die Zellwände dem Zellwachstum anzupassen. Dann reißen die Zellwände. Vorzugsweise wird die Offenzelligkeit unmittelbar bei der Extrusion des Schaumes erzeugt. Die Offenzelligkeit kann jedoch auch durch Nachschäumen erzeugt bzw. verstärkt werden.
Die Offenzelligkeit wird durch die Wahl des Kunststoffes, des Treibmittels und durch die Verfahrensparameter bei der Extrusion bestimmt. Nach der Erfindung wird die Offenzelligkeit des entstandenen Schaumes dadurch evident, daß Luft und andere Gase in Längsrichtung durch den entstandenen Schaumstrang ohne Diffusionsvorgänge hindurchgedrückt werden können. Ein Nachweis der Offenzelligkeit kann auch mit Wasser bzw. anderen Flüssigkeiten geführt werden. Wie bei Gas kann das Wasser mit einem Prüfdruck an dem Schaum anstehen und anschließend der Gasdurchgang gemessen werden.

Es ist zur Messung auch möglich, den Kunststoffschaum zusammenzudrücken und in Flüssigkeit zu legen. Nach dem Zusammendrücken saugt der Schaum bei der anschließenden Rückstellung wie ein Schwamm Flüssigkeit an. Für den Nachweise der Offenzelligkeit bzw. den Nachweis immer gleicher Offenzelligkeit ist es von Vorteil, unter Verwendung immer gleicher Prüfkörper eine immer gleiche Zusammendrückung von z.B. 50% vom Ausgangsvolumen zu wählen und die aufgesaugte Flüssigkeitsmenge zu messen.
Wahlweise kann die Offenzelligkeit auch mittels einer DIN-Prüfung der
Geschlossenzelligkeit erfolgen. Bei Vorliegen des Maßes der Geschlossenzelligkeit ergibt sich daraus auch das Maß der Offenzelligkeit.

Bei der erfindungsgemäßen Fahrweise des Extruders entsteht in der Düse zugleich eine Extrusionshaut an dem austretenden Schaumstrang. Die Haut des Extrusionsstranges soll eine bestimmte Dichte gegen Wasser aufweisen. Als Maß der Dichte ist wahlweise vorgesehen, daß anstehendes Wasser mit 50 mm hohem Wasserstand in 24 h nicht mit mehr als 1Vol%Wasser, bezogen auf das wasserbelastete Prüfkörpervolumen, in den Prüfkörper eindringt. Als wasserbelastetes Prüfkörpervolumen wird das Volumen angesehen, welches in der Längsrichtung (Projektion) der Wassersäule liegt. Der Prüfkörper wird vorzugsweise durch eine Hautschicht gebildet, die aus dem Prüfmaterial mit Zellmaterial in einer Dicke von zum Beispiel 3 mm herausgeschnitten worden ist.

Anstelle des Wassers können auch andere Prüfflüssigkeiten bei der Hautprüfung Einsatz finden. Um die dann erzielten Ergebnisse vergleichen zu können, ist wahlweise ein Vergleichstest mit der zuvor beschriebenen Hautprüfung mit Wasser vorgesehen. Daraus kann ein Umrechnungsfaktor ermittelt werden. Daraus kann auch eine Anpassung des Fllüssigkeitsstandes ermittelt werden, so daß nach Anpassung/Änderung des Flüssigkeitsstandes die eindringende Flüssigkeitsmenge unmittelbar mit der Flüssigkeitsmenge aus der Hautprüfung mit Wasser verglichen werden kann.

Bei der Hautprüfung soll das wasserbelastete Prüfinaterial vorzugsweise immer gleich groß sein. Bei abweichendem Prüfinaterial muß hoch gerechnet oder herunter gerechnet werden. Ggfs. sind vergleichende Test mit bekanntem Prüfmaterial zweckmäßig.

Nach Möglichkeit soll die Prüfwassersäule immer mit dem gleichen, das Wasser haltenden Zylinder und immer mit dem gleichen Flächendruck/Gewicht auf dem Prüfkörper errichtet werden. Vorzugsweise wird der Zylinder in den Schaum so tief eingedrückt, daß ein Entweichen von Wasser an der Berührungsfläche zwischen Zylinder und Schaum ausgeschlossen ist.

Es wird ein Glaszylinder mit Meßstrichen empfohlen, an denen der Wasserstand und der Wasserverlust immer ablesbar sind.
Vorzugsweise hat der Glaszylinder einen Innendurchmesser von 10 mm, eine Länge von 60 mm und eine Wanddicke von 1 mm.
Der Glaszylinder kann in einer Führung genau senkrecht über dem Prüfkörper gehalten werden.

Vorteilhafterweise schützt die Extrusionshaut vor dem Eindringen von Feuchtigkeit, Staub und Tieren. Dadurch eignet sich der erfindungsgemäße Schaumstrang für alle entsprechenden Anwendungen, auch für nicht drückendes Wasser. Nicht drückend heißt: der Druck von anstehendem Wasser soll so gering sein, daß keine Gefahr einer Leckage besteht. Dabei darf das das Wasser den Schaum auch nicht abheben, wenn das Wasser eine Dichtfläche des Schaumes unterwandert.
Vorteilhafterweise eignet sich der erfindungsgemäße Schaum für alle eingangs beschriebenen Anwendungen. Dabei sticht die leichte Handhabbarkeit des Schaumstranges hervor. Der Schaum läßt sich leicht zusammendrücken, um in Fugen oder Spalten gedrückt zu werden. Durch Vorkomprimierung und verzögerte Rückstellung kann der Schaumstrang sehr leicht der Fugenbreite bzw. der Spaltbreite angepaßt und in der Fuge bzw. dem Spalt positioniert werden. Das erleichtert die Montage und verhindert Schäden an empfindlichen Flächen.

Die Offenzelligkeit erlaubt es dem Schaum, sich wesentlich konturgenauer an eine unebene Fläche anzulegen als ein geschlossenzelliger Schaum. Überraschenderweise ist die Dichtwirkung der erfindungsgemäßen Schäume trotz geringer Anpreßkraft an den Dichtflächen wesentlich größer als die Dichtwirkung geschlossenzelliger Schäume bei vergleichbarer Belastung durch das anstehende und abzusperrende Wasser. Das wird darauf zurückgeführt, daß die unter erheblicher Spannung stehende Oberfläche einer geschlossenzelligen Dichtschaumfläche sich längst nicht so genau an eine unebene Fläche anpassen kann. Diese vorteilhafte Anpassung an unebene Flächen ist besonders an Gebäuden wichtig. Soweit die Flächen nicht schon uneben sind, ist im rauhen Baubbetrieb eine Verschmutzung in Fugen und Spalten und eine damit verbundene Unebenheit nicht zu vermeiden.
Bei der Abdichtung von Klimakanälen und dergleichen ergeben sich mit dem erfindungsgemäßen Schaum ähnliche Vorteile wie bei der Abdichtung gegen Feuchtigkeit/Wasser.

Vorzugsweise hat der erfindungsgemäße Schaum in der Anwendung auf Gebäude ein Raumgewicht von 20 bis 80 kg pro Kubikmeter, noch weiter bevorzugt von 30 bis 40 kg pro Kubikmeter
Desgleichen eignet sich der erfindungsgemäße Schaumstrang als Dichtung in Maschinenschränken und Elektroschränken. Das Eindringen von Feuchtigkeit, von Staub und Tieren kann auf dem Wege verhindert werden.
Vorzugsweise hat der erfindungsgemäße Schaum in dieser Anwendung auch ein Raumgewicht von mehr als 20 bis 80 kg pro Kubikmeter, noch weiter bevorzugt ein Raumgewicht von 30 bis 40 kg pro Kubikmeter.

Der erfindungsgemäße Schaumstoff eignet sich auch für die Schalldämmung, insbesondere als Gehörschutz. Bei dem Gehörschutz wird wahlweise ein Schaumstoffpropfen ins Ohr gesetzt. Die Ohrgänge sind so kompliziert, daß der erfindungsgemäße Schaum zur Anpassung an die Gehörgänge geeignet ist. Dabei kann die Ausgangsform der Propfen durchaus stark von der Gehörgangkonfiguration abweichen. Der erfindungsgemäße Schaum kann leicht zusammengedrückt werden. Beim Expandieren passen sich die erfindungsgemäßen Schäume der komplizierten Gehörgangform perfekt an. Die erfindungsgemäße Schäume belasten die die Personen kaum.

Ähnlich wie bei Gehörschutz ist die Situation der Kopfhörern. Dabei werden Mini-Lautsprecher am Ohr positioniert und wird die Geräuchemission nach außen nach Möglichkeit verhindert. Auch hier zeigen die erfindungsgemäßen Schäume Vorteile.
Für die Anwendung als Gehörschutz sind leichte Schäume von Vorteil, vorzugsweise mit einem Raumgewicht von höchstens 30 kg pro Kubikmeter, noch weiter bevorzugt von höchstens 25 kg pro Kubikmeter.
Eine ähnliche Situation besteht auch bei Helmen, Schulter- und Gelenkschutz. Dort soll der Kunststoffschaum Stoßbelastungen abfedern, dämpfen. Der Tragekomfort hängt von der weichen Anpassung des Schaumes an den Körper ab. Der erfindungsgemäße Schaum gewährleistet einen besonders hohen Tragekomfort durch optimale Anpassung.

Ein weiterer Anwendungsbereich ist der Verpackungsbereich.
Dort müssen Stoßbelastungen aufgefangen werden. Je empfindlicher das Verpackungsgut ist, desto sorgfältiger muß der Stoßbelastung entgegengewirkt werden. Herkömmlich wird geschlossenzelliger Polystyrolschaum oder auch geschlossenzelliger PE-Schaum für die Stoßdämpfung verwendet. Der herkömmliche Schaum wirkt mehr federnd und hat einen harten Anschlag.
Der erfindungsgemäße Schaum hat einen viskoelastischen Bremseffekt. Der Anschlag ist weicher. Die Bremsstrecke/Dämpfungsstrecke ist länger.
Wahlweise werden Schaumstücke aus erfindungsgemäßem Material mit Schaumstücken aus herkömmlichem geschlossenzelligem Material kombiniert. Dabei haben die Schaumstücke aus herkömmlichem Material die Aufgabe schnellerer Rückstellung.

Überraschender Weise stört die Extrusionshaut nicht bei dem Zusammendrücken des Schaumstranges. Bei vollständig geschlossener Haut entweicht die Luft an der Druckstelle seitlich in den Schaumstrang und bei Bedarf durch die Enden des Schaumstranges. Bedarf ist gegeben, wenn der Schaumstrang insgesamt zusammengedrückt wird. Der dem Entweichen entgegenstehenden Widerstand macht sich bei der Montage eines Schaumstranges nicht bemerkbar, weil der Schaumstrang regelmäßig nicht auf seiner ganzen Länge gleichzeitig, sondern an einem Ende/Punkt beginnend abschnittsweise eingesetzt/verlegt wird. Bei Abschnittslängen, die bei der Montage von Hand handhabbar sind, bildet das Entweichen der Luft und der damit verbundene Luft kein nennenswertes Hindernis.
Etwas anderes kann sich ergeben, wenn der Schaumstrang großflächig zusammengedrückt werden soll. Dann kann das Entweichen der Luft durch Öffnungen an geeigneten Strangflächen erleichtert werden.
Die Extrusionshaut ist weich, gleichwohl ist sie an der Stoßdämpfung und der Rückstellung des Schaumes beteiligt.

Die Verlegung der Dichtung kann an Schränken in Nuten des Schrankes erfolgen. Die Nuten bilden für die Dichtung einen Halt. An Befestigungsflächen ohne Nuten kann die Montage der Dichtung durch Kleben erfolgen. Eine selbstklebende Ausbildung der Dichtung erleichtert die Montage. Die Selbstklebung kann mit Hilfe einer aufgebrachten Klebeschicht erreicht werden. Die Klebeschicht wird wahlweise vor Montage mit einer Trennfolie oder Trennpapier abgedeckt, welches zur Montage entfernt wird.

Als Kunststoff für die erfindungsgemäße Herstellung des Schaumstranges ist die Verwendung eines mit Hilfe von Metallocen katalytisch hergestellten PE (nachfolgend genannt metallocen-PE) besonders vorteilhaft. Mit diesem PE bildet sich bei einer Extrusionstemperatur von 110 bis 116 Grad Celsius, vorzugsweise von 111 bis 115 Grad Celsius, ein Kunststoffschaum mit allen gewünschten Eigenschaften.
Die weiteren Extrusionsbedingungen sind:
a) Isobutan oder Propan als Treibmittel
b) mit einem Treibmittelanteil von 6 bis 14 Gew%, bezogen auf die Menge des Materialeinsatzes im Extruder
c) einem Schaum-Raumgewicht von 20 bis 80 kg pro Kubikmeter, gegebenenfalls bis 120 kg pro Kubikmeter, wobei die Treibmittelmenge für ein Schaum-Raumgewicht von 25 bis 35 kg pro Kubikmeter 12Gew% plus/minus 2 Gew%, bezogen auf die Menge des Materialeinsatzes beträgt der Extrusionsdruck gegenüber einer herkömmlichen PE-Schaumextrusion (bei etwa 30 bar) nach dem erfindungsgemäßen Verfahren wesentlich höher ist, nämlich bezogen auf einen Profil-Querschnitt von 5 Quadratzentimeter 48 bis 50 bar. Nach der Erfindung kann der Druck unter Reduzierung der Schmelzetemperatur erhöht werden. Der Schmelze steht dann ein wesentlich höherer Strömungswiderstand in der Düse entgegen.

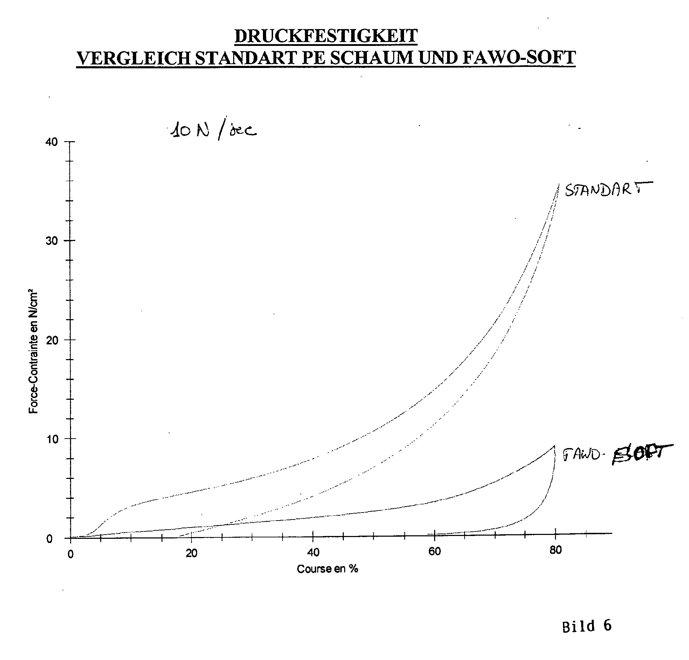

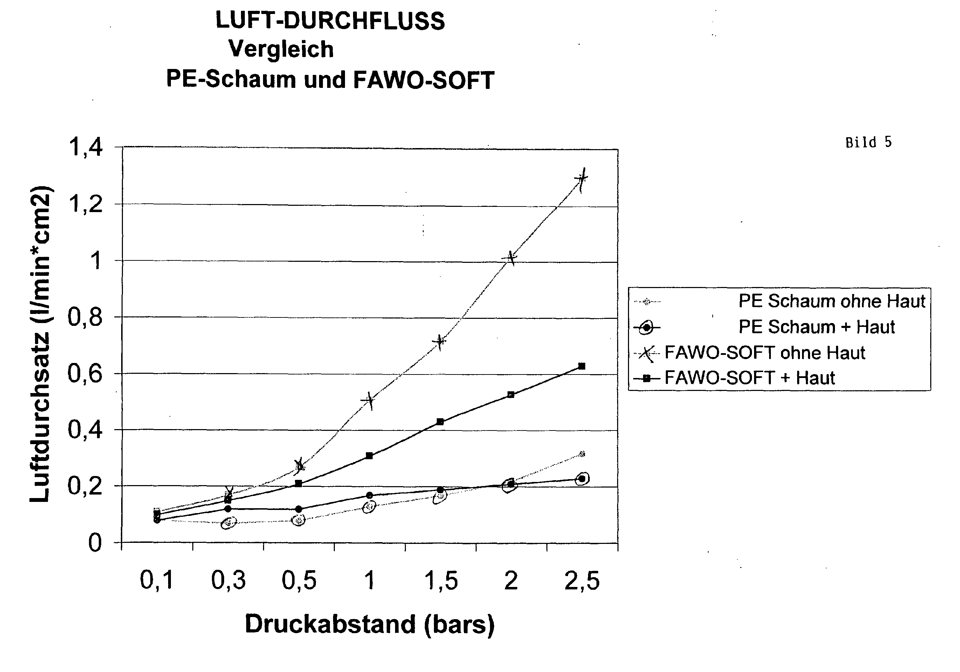

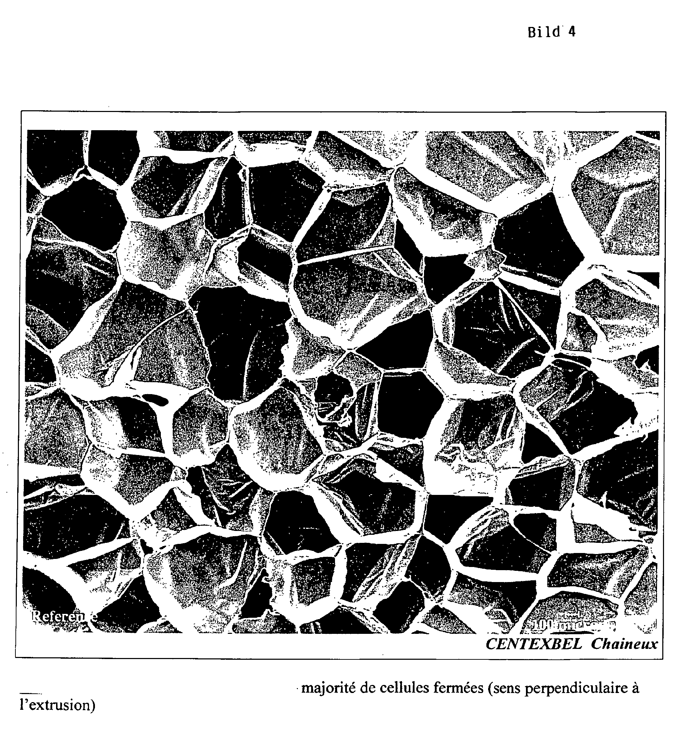

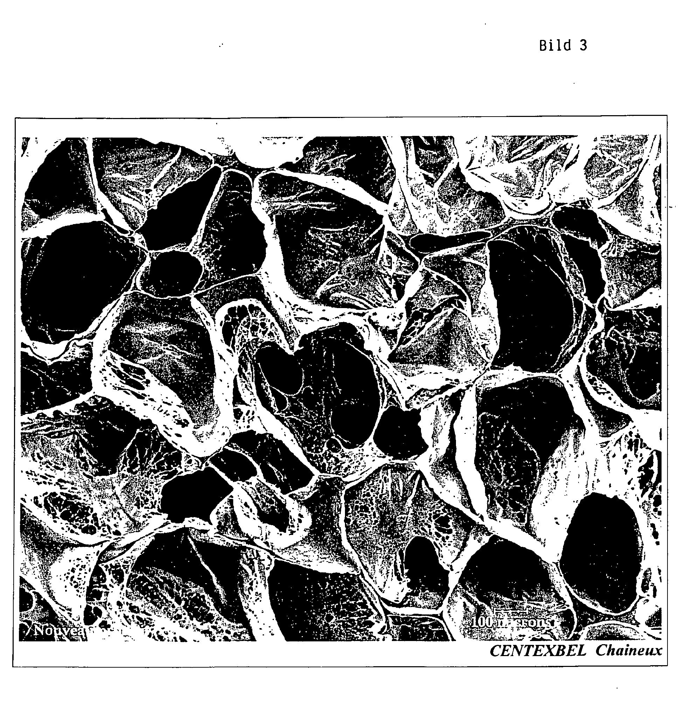

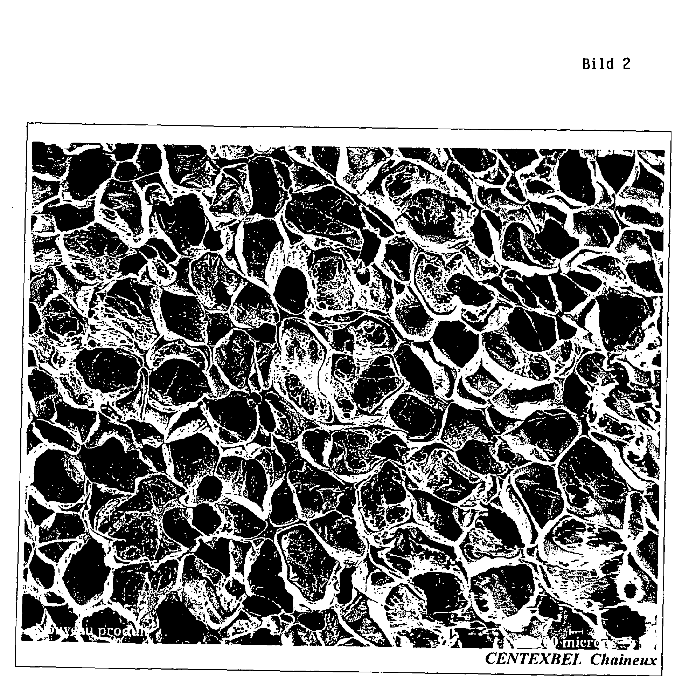

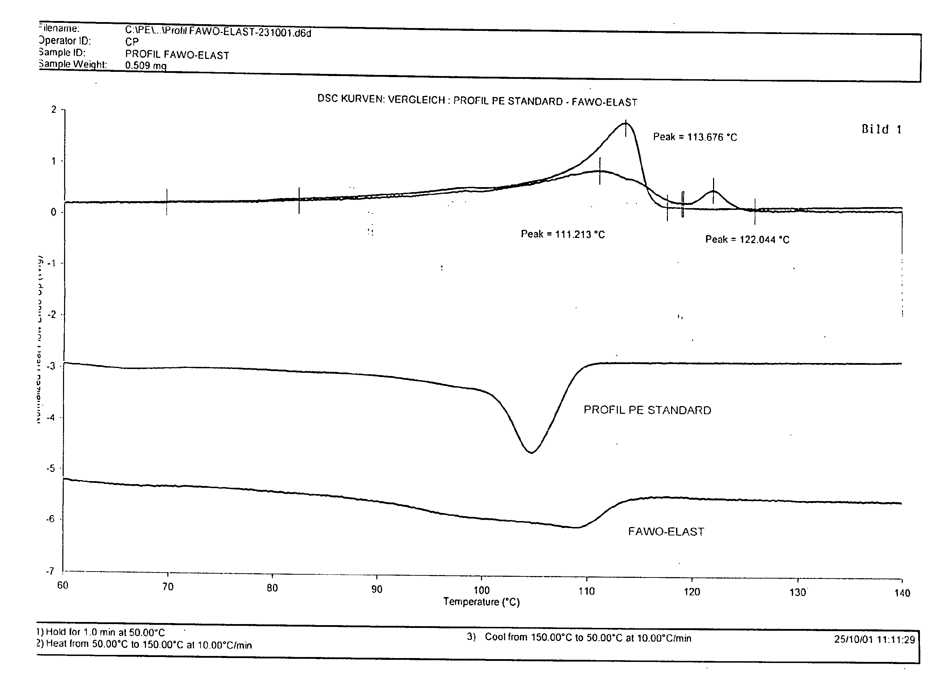

Die Erfindung hat zur Herstellung eines offenzelligen Schaumes versuchsweise auch PE eingesetzt, welches unter Verwendung von Metallocen-Katalysatoren hergestellt worden ist. Die Erfindung hat dabei festgestellt, daß die DSC-Kurve gemäß Bild 1 zwei Temperaturspitzen(peak) zeigt, eine bei 111 Grad Celsius und eine bei 122 Grad Celsius. Zu dem Temperaturpeak bei 111 Grad Celsius gehört ein breiter Buckel, der schon bei 100 Grad Celsius eine beträchtliche Größe besitzt. Im Vergleich dazu hat ein PE Standard nur einen Temperaturpeak, der bei 113 Grad Celsius liegt.
Bei einer Extrusionstemperatur des Versuchsmaterials von 116 Grad Celsius ist ein weitgehend offenzelliger Schaum entstanden

Die Erfindung geht davon aus, daß bei der Extrusionstemperatur von 116 Grad Celsius ein niedrig schmelzender Materialanteil extrem ist und deshalb keine nennenswerte Schmelzespannung entfalten kann. Während ein anderer hoch schmelzender Materialanteil noch sehr zäh ist, d.h. eine hohe Schmelzespannung hat.
Wenn der Schaum das Extrusionswerkzeug/Düse verläßt und an die Umgebungsluft tritt und das Treibmittel aufgrund des Druckabfalls in Aktion tritt, bilden sich zwar Zellen. Der hochflüssige Schmelzeanteil ist aber nicht in der Lage das Zellwachstum zu begrenzen. Es muß an den Stellen der hochflüssigen Schmelze zwangsläufig zu einer Zerstörung der Zellwände kommen. Es bilden sich durchlässige Öffnungen.
Hinsichtlich des zu der hohen Temperaturspitze gehörigen Materialanteils geht die Erfindung davon aus, daß dieser Schmelzanteil nahe dem Kristallisationspunkt ist und eine extrem hohe Schmelzespannung zeigt. Die hohe Schmelzespannung bewirkt, daß im übrigen stabile Zellwände mit ausreichender Rückstellkraft entstehen. Diese Situation läßt sich an Bild 2 und 3 nachvollziehen. Bild 2 zeigt den erfindungsgemäß hergestellten Schaum in einer vergrößerten Wiedergabe. Bereits in dieser Wiedergabe sind Löcher in den Zellwänden erkennbar. Die Löcher werden in der weiteren Vergrößerung nach Bild 3 noch deutlicher.

Herkömmliche PE-Schäume sehen bei offenzelliger Herstellung anders aus. Die Zellen platzen bei übermäßiger Belastung. Die Zellwände haben im übrigen jedoch ein gleichmäßiges Aussehen. Bild 4 belegt das.

Die Luftdurchlässigkeit des metallocen-PE-Schaumes ist in Bild 5 im Vergleich zu herkömmlichem PE-Schaum dargestellt. Es ist leicht ablesbar, daß der offenzellige metallocen-PE-Schaum etwa doppelt so durchlässig ist wie der offenzellige Schaum aus herkömmlichem PE.

Die Wirkung eines erfindungsgemäß offenzelligen Schaumes ist aus Bild 6 ablesbar. Dort ist der Widerstand/Druckfestigkeit des erfindungsgemäßen Schaumes im Vergleich zu herkömmlichem geschlossenzelligen PE-Schaum dargestellt. Die mit FAWO-SOFT bezeichnete Kurve zeigt einen nahezu über den gesamten Verformungsweg proportional wachsenden Verformungswiderstand, während der Verformungswiderstand des als STANDART bezeichneten herkömmlichen geschlossenzelligen PE-Schaumes nach einer Exponentialfunktion ansteigt.

Der erfindungsgemäße Schaum wird mit Raumgewichten von 20 bis 120 kg pro Kubikmeter, vorzugsweise von 25 bis 35 kg pro Kubikmeter hergestellt. Die Offenzelligkeit ergibt sich bei der erfindungsgemäßen Herstellung auch bei hohen Raumgewichten ohne Schwierigkeit.

Trotz der hohen Nachgiebigkeit besitzen die erfindungsgemäßen Schäume eine dem jeweiligen Anwendungsfall angepaßte Rückstellfähigkeit. Die Rückstellfähigkeit hat unmittelbare Wirkung auf Dichtung.
Die Rückstellfähigkeit wird umso größer, je dicker die Zellwände des Schaumes sind.
Damit die in den offenen Zellen eingeschlossene Luft entweichen kann, wird das Dichtungsprofil mit offenen Enden eingebaut. Wo keine offenen Enden möglich sind, wird das Dichtungsprofil wahlweise an geeigneter Stelle mit Öffnungen versehen. Das geschieht vorzugsweise an den Innenseiten, die nicht zugleich Dichtflächen sind. Die Öffnung entsteht durch mechanisches Heraustrennen der Außenhaut. Vorteilhaft sind Perforierungen oder längliche schlitzförmige Öffnungen in der Haut. Die Öffnungen können regelmäßige oder unregelmäßige Abstände voneinander aufweisen, sich aber auch über die gesamte Profillänge erstrecken. Bei langen Schlitzen kann deren Breite gering sein.
Die Öffnungen können mit Nägeln, Messern oder Fräsern hergestellt werden.

Die erfindungsgemäßen Profile können beliebige Querschnittsformen besitzen

Aus dem erfindungsgemäßen Schaum können nicht nur Profile sondern auch Bahnen und Platten hergestellt werden.
Die Profile werden vorzugsweise in einer Breite von 10 bis 200 mm und einer Dicke von 10 bis 30 mm hergestellt.
Bahnen und Platten werden wahlweise in Breiten ab 200 mm, 300mm, 600mm, 1000 mm und mehr als 2000mm hergestellt.

Wahlweise können die erfindungsgemäßen Schaummaterialien auch zu Verbundmaterial mit anderem Material verarbeitet werden bzw. zu einem mehrschichtigen Halbfabrikat verarbeitet werden.
Wahlweise werden die erfindungsgemäßen Schaummaterialien auch durch Thermoformieren bearbeitet. Das geschieht zum Beispiel, um Einzelteile aus einer Bahnenware herauszuschneiden. Bei dem Schneiden finden beheizte Schneidmesser und/oder beheizte Niederhalter Anwendung, so daß die Schnittfläche dicht verschweißt. Nach dem Verschweißen bleiben die Schneidmesser und/oder Niederhalter solange in der Schweißstellung, bis die Schweißfläche ausreichend gekühlt ist und durch die Rückstellung des Schaumes nicht zerstört wird.

## Patentansprüche

1. Herstellung von offenzelligem Kunststoffschaum, **gekennzeichnet durch** die
a) die Extrusion eines offenzelligen Schaumes aus thermoplastischem Kunststoff, insbesondere von PE, mit einer Außenhaut am Extrusionsstrang
b) wobei die Außenhaut vorzugsweise wasserfest und/oder vorzugsweise elastisch/dehnfähig und/oder vorzugsweise reißfest ist,
c) wobei die Offenzelligkeit bei der Extrusion so eingestellt wird, daß ein Prüfkörper aus dem Schaum bei 80%iger Zusammendrückung, kurzzeitigem Halten der Zusammendrückung und plötzlicher Entlastung mindestens eine Rückstellzeit von 3 sec, vorzugsweise 5 sec, noch weiter bevorzugt 10 sec, für die Erreichung von 100% der ursprünglichen Form hat,
wobei der Prüfkörper eine Dicke von 1 cm, eine Länge von 10 cm und eine Breite von 3 cm besitzt und in flach liegendem Zustand mittig auf einer Länge von 3 cm über seiner gesamten Breite zusammengedrückt wird,
wobei die Haltezeit 1 sec beträgt,
wobei eine Umgebungstemperatur von 20 Grad Celsius besteht,
d) wobei die Wasserdichte vorzugsweise so eingestellt wird, daß der Prüfkörper bei anstehendem Wasser mit 50 mm hohem Wasserstand in 24 h nicht mehr als 1 Vol% Wasser, bezogen auf das wasserbelastete Prüfkörpervolumen aufnimmt.

2. Herstellung nach Anspruch 1, **gekennzeichnet durch** die Verwendung von PE, das im Kurvenverlauf der Erweichung bei zunehmender Temperatur mindestens zwei Spitzen aufweist, die mindestens 5, vorzugsweise mindestens 9, und noch weiter bevorzugt mindestens 13 Grad Celsius auseinanderliegen, insbesondere mit mindestens einem buckelartigen Verlauf an einer Spitze und einem für die offenzellige Herstellung nutzbaren Verlauf von mehr als 5, vorzugsweise von mehr als 9 und noch weiter bevorzugt von mehr als 13 Grad Celsius..

3. Herstellung nach Anspruch 1 oder 2, **gekennzeichnet durch** die Verwendung eines PE aus einer katalytischen PE-Herstellung mit einem Metallocen als Katalysator.

4. Herstellung nach Anspruch 1 oder 2, **gekennzeichnet durch** die Verwendung einer Mischung aus PE und anderen Polymeren.

5. Herstellung nach Anspruch 4, **dadurch gekennzeichnet, daß** der Anteil von PE in Mischung mit anderen Polymeren mindestens 50 Gew%, bezogen auf die Gesamtmenge beträgt.

6. Herstellung nach einem der Ansprüche 2 und 3 oder 4, **dadurch gekennzeichnet, daß** die Extrusionstemperatur unterhalb der höheren Temperaturspitze liegt.

7. Herstellung nach den Ansprüchen 2, 3 und 6, **dadurch gekennzeichnet, daß** die Extrusionstemperatur 111 bis 120, vorzugsweise 114 bis 118 Grad Celsius beträgt.

8. Herstellung nach einem der Ansprüche 1 bis 7, **gekennzeichnet durch** die Verwendung von Isobutan oder Propan als Treibmittel in der Kunststoffschmelze.

9. Herstellung nach Anspruch 8, **dadurch gekennzeichnet, daß** die Treibmittelmenge für Schaum-Raumgewichte von 20 bis 100 kg pro Kubikmeter 6 bis 14 Gew%, bezogen auf die Materialeinsatzmenge im Extruder, beträgt.

10. Herstellung nach Anspruch 9, **dadurch gekennzeichnet, daß** die Treibmittelmenge für einen Schaum mit einem Raumgewicht von 25 bis 35 kg pro Kubikmeter 12 Gew%, plus/minus 2 Gew%, bezogen auf die Materialeinsatzmenge im Extruder, beträgt

11. Herstellung nach einem der Ansprüche 7 bis 10, **gekennzeichnet durch** einen Extrusionsdruck an der Extrusionsdüse für einen Strangquerschnitt von 5 Quadratzentimetern 46 bis 52 bar, vorzugsweise 48 bis 50 bar, beträgt.

12. Herstellung nach einem der Ansprüche 1 bis 11, **gekennzeichnet durch** die Herstellung von Dichtungen mit offenen Enden und/oder Öffnungen in der Außenhaut.

13. Herstellung nach Anspruch 11, **gekennzeichnet durch** Perforierungen oder schlitzförmige Öffnungen in der Außenhaut.

14. Herstellung nach einem der Ansprüche 1 bis 13, **gekennzeichnet durch** Dichtungen und/oder Dämmungen und/oder Dämpfungsmaterial aus dem Kunststoffschaum.

15. Herstellung nach Anspruch 14, **gekennzeichnet durch**
a) Fugenprofile für Gebäude und/oder
b) Dichtungen für Elektroschränke und/Maschinenschränke und/oder Klimakanäle bzw. Ventilationskanäle oder Schächte und/oder
c) Füllmaterial und/oder
d) Schwingungsdämpfungsmatten und -platten und/oder
e) Gehörschutz und/oder
f) Kopfhörer und/oder
g) Verpackungsmaterial und/oder
h) Helme und Panzer für Schultern und andere Körperteile und/oder
i) Trittschalldämmung unter Estrich an Bauwerken
j) Schalldämmrandstreifen am Estrich
ganz oder teilweise aus dem Kunststoff bestehend

16. Herstellung nach Anspruch 15 **gekennzeichnet durch** Dichtungen gegen nicht drückende Feuchtigkeit und/oder Staub und/oder Tiere.

17. Herstellung nach einem der Ansprüche 14 bis 16, **dadurch gekennzeichnet, daß** mindestens eine Seite der Dichtung selbstklebend ausgebildet wird.

18. Herstellung nach Anspruch 15, **dadurch gekennzeichnet, daß** die Verpackung teilweise aus dem offenzelligen Kunststoffschaum und teilweise aus geschlossenzelligem Schaum besteht, der eine beschleunigte Rückstellung des Verpackungsgutes bewirkt.

19. Herstellung nach einem der Ansprüche 1 bis 18, **gekennzeichnet durch** die Extrusion von Profilen mit einer Breite von 10 bis 200 mm und einer Dicke von 10 bis 30 mm und/oder Extrusion von Folien, Bahnen und Platten mit einer Breite von 200mm oder 300 mm oder 600 mm oder 1000 mm oder 2000 mm oder mehr.
